# EUROPÄISCHE PATENTSCHRIFT

(11) **EP 2 984 396 B1**
(45) Veröffentlichungstag und Bekanntmachung des Hinweises auf die Patenterteilung: **22.05.2019**
(21) Anmeldenummer: 14723675.6
(22) Anmeldetag: 07.04.2014
(51) Int. Cl.: F21S 41/43, F21S 41/147

(54) **LEUCHTEINHEIT MIT BLENDE MIT ZUMINDEST EINEM LICHTFENSTER**
LAMP UNIT COMPRISING A SHIELD HAVING AT LEAST ONE LIGHT WINDOW
UNITÉ LUMINEUSE DOTÉE D'UN CACHE POURVU D'AU MOINS UNE FENÊTRE OPTIQUE

(30) Priorität: 09.04.2013 AT 502422013
(43) Veröffentlichungstag der Anmeldung: 17.02.2016
(73) Patentinhaber: ZKW Group GmbH, 3250 Wieselburg (AT)
(72) Erfinder: KIESLINGER, Dietmar, 2604 Theresienfeld (AT); ALTMANN, Johann, 3950 Gmünd (AT)
(74) Vertreter: Patentanwaltskanzlei Matschnig & Forsthuber OG
(86) Internationale Anmeldenummer: PCT/AT2014/050081
(87) Internationale Veröffentlichungsnummer: WO 2014/165884

(56) Entgegenhaltungen:
- EP-A1- 2 006 605
- EP-A1- 2 420 728
- EP-A2- 2 184 532
- DE-A1- 10 004 701
- JP-A- 2004 172 104
- JP-A- 2007 287 610
- JP-A- 2012 174 343
- US-A1- 2007 086 202
- US-A1- 2007 147 062
- US-A1- 2011 170 308
- US-A1- 2011 261 576

## Beschreibung

Die Erfindung betrifft eine Leuchteinheit für einen Scheinwerfer, insbesondere einen Kraftfahrzeugscheinwerfer, aufweisend zumindest zwei Lichtquellen, zumindest einen Reflektor, der zumindest zwei Lichtkammern begrenzt, eine Blende und eine Projektionslinse mit einer optischen Achse, wobei eine Lichtkammer an einer Oberseite und eine Lichtkammer an einer Unterseite der Blende angeordnet ist, wobei innerhalb der Lichtkammern jeweils zumindest eine Lichtquelle angeordnet ist, und sich die Blende zur Erzeugung einer scharfen Hell-Dunkelgrenze in einem durch die Leuchteinheit erzeugten Lichtbild im Wesentlichen bis zu einer Brennebene der Projektionslinse erstreckt, wobei die Blende zumindest ein Lichtfenster aufweist, wobei zumindest ein Lichtpfad von einer Lichtkammer durch das zumindest eine Lichtfenster und durch die Projektionslinse nach außen verläuft.

Derartige Leuchteinheiten sind im Fahrzeugbau gebräuchlich, wobei die an der Oberseite befindliche Lichtkammer (des Weiteren auch als "obere Lichtkammer" bezeichnet) häufig eine Abblendlichtfunktion übernimmt und die an der Unterseite befindliche Lichtkammer (des Weiteren auch als "untere Lichtkammer" bezeichnet) eine Fernlichtfunktion zukommt. Die beiden Lichtkammern sind dabei durch eine Blende voneinander getrennt, welche beispielsweise dazu eingerichtet ist, eine scharfe Hell-Dunkelgrenze in einem durch die Abblendlichtfunktion erzeugten Lichtbild zu gewährleisten, sodass eine Blendung von vorausfahrenden sowie von entgegenkommenden Fahrzeugen weitgehend vermieden wird.

So zeigt beispielsweise das Dokument EP 1 912 018 A1 eine Leuchteinheit, bei zwei Reflektoren jeweils eine Lichtkammer bilden, in welche Lichtkammer jeweils eine Lichtquelle strahlt, wobei das eingestrahlte Licht durch den Reflektor auf eine Projektionslinse gelenkt wird.

Des Weiteren zeigt das Dokument DE 10 2008 015 510 B4 eine Leuchteinheit, bei welcher ein Reflektor Licht von einer Lichtquelle so reflektiert, dass das Licht auf einer optischen Achse einer Projektionslinse oder in deren Nähe gesammelt wird.

Das Dokument US 2007/0086202 A1 zeigt eine Leuchteinheit mit zwei Lichtquellen, die in zwei voneinander getrennten Lichtkammern angeordnet sind. Des Weiteren zeigt das Dokument JP 2006107875 A ein eine Leuchteinheit mit zwei, in voneinander getrennten Lichtkammern angeordneten Lichtquellen. Das Dokument EP 2184532 A2 zeigt eine gattungsgemäße Leuchteinheit.

Aus dem Dokument DE 60 2004 002 043 T2 ist eine Leuchteinheit bekannt geworden, in welcher zwei Ellipsoid-Reflektoren, die jeweils einen Reflexionsraum für Lichtstrahlen umgrenzen und jeweils eine im Wesentlichen elliptische Reflexionsfläche aufweisen, zwei Lichtquellen, die jeweils in der Nähe eines ersten Brennpunktes eines jeden Reflektors angeordnet sind, und einer Projektionslinse, deren Brennebene in der Nähe eines zweiten Brennpunktes des ersten Reflektors angeordnet ist, wobei der erste Reflektor auch eine ebene horizontale Reflexionsfläche aufweist, deren Oberseite reflektierend ist. Der zweite Reflektor ist unterhalb des ersten Reflektors angeordnet, wobei der zweite Reflektor gegenüber dem ersten Reflektor eine Neigung aufweist und dazu eingerichtet ist, ebenso Licht zu dem zweiten Brennpunkt oder in dessen Nähe zu lenken, wobei die ebene horizontale Reflexionsfläche des ersten Reflektors an der Oberseite eines lichtdurchlässigen Teils angebracht ist, wobei die Unterseite des lichtdurchlässigen Teils von Lichtstrahlen des zweiten Reflektors durchdrungen werden kann, sodass die Lichtstrahlen in den zweiten Brennpunkt gelangen können. Ziel dieser Leuchteinheit ist es, die Eigenschaft als Lichtquelle dienender gekapselter Dioden, allgemein in eine Raumhälfte auszustrahlen, zunutze zu machen, wodurch der von der Diode emittierte Lichtstrom effizienter zu großen Teilen erfasst werden kann.

Den aus dem Stand der Technik bekannten Leuchteinheiten ist der Nachteil gemein, dass diese keine gezielte Vermengung bzw. Überlappung der Lichtstrahlen einer ersten oberseitig angebrachten und einer zweiten unterseitig angebrachten Lichtkammer ermöglichen. Einer gezielten Beeinflussung der Hell-Dunkelgrenze sind daher bei aus dem Stand der Technik bekannten Konstruktionen in Anbetracht üblicher fertigungstechnischer sowie wirtschaftlicher Anforderungen enge Grenzen gesetzt.

Es ist daher eine Aufgabe der Erfindung, eine Leuchteinheit für einen Scheinwerfer, insbesondere einen Kraftfahrzeugscheinwerfer, zu schaffen, welche eine gezielte Vermengung der Lichtstrahlen einer ersten oberseitig angebrachten und einer zweiten unterseitig angebrachten Lichtkammer ermöglicht. Unter Vermengung der Lichtstrahlen ist dabei ein Überlappen des ausgeleuchteten Bereichs im Lichtbild zu verstehen.

Diese Aufgabe wird mit einer Leuchteinheit gemäß Anspruch 1 gelöst. Das Vorsehen der erfindungsgemäßen kennzeichnenden Merkmale erlaubt eine gezielte Beeinflussung des Lichtbildes und erhöht die Effizienz der Leuchteinheit.. Dank der Erfindung ist es möglich, Lichtstrahlen zweier Lichtkammern gezielt zu Vermengen. So kann einerseits eine scharfe Hell-Dunkelgrenze, wie diese beispielsweise im Lichtbild einer Abblendlichtfunktion gefordert ist, realisiert werden und gleichzeitig können Inhomogenitäten (insbesondere ein schattiges Band im Bereich der Hell-Dunkelgrenze) im Lichtbild einer Fernlichtfunktion besonders einfach, wirtschaftlich und effizient minimiert werden. Darüber hinaus ist eine gezielte Abstrahlung von Lichtstrahlen in Bereiche des Lichtbildes möglich, welche üblicherweise zur Beleuchtung von Verkehrsschildern von besonderer Bedeutung sind (sogenanntes "sign light"). Die erfindungsgemäßen Merkmale der Leuchteinheit ermöglichen darüber hinaus einen besonders günstigen und robusten Aufbau. Die Blende ist nicht beweglich sondern starr ausgeführt.

Erfindungsgemäß ist es vorgesehen, dass die Blende zumindest zum Teil eine reflektierende Oberfläche aufweist. Dadurch kann die Effizienz des Scheinwerfersystems zusätzlich gesteigert werden, indem zusätzlich an der Blende reflektiertes Licht, das sonst an der Blende absorbiert wird, in die Projektionslinse und somit in ein durch die Leuchteinheit bzw. den Scheinwerfer erzeugtes Lichtbild eingebracht werden kann.

Um eine besonders gezielte Beeinflussung durch die einzelnen Lichtkammern auf das durch die Leuchteinheit erzeugte Lichtbild zu ermöglichen, kann es in einer günstigen Ausgestaltung der Erfindung vorgesehen sein, dass der zumindest eine Lichtpfad durch das zumindest eine Lichtfenster ausschließlich von der an der Unterseite der Blende befindlichen Lichtkammer durch das zumindest eine Lichtfenster durch die Projektionslinse nach außen verläuft. So kann beispielsweise in einem Betriebsmodus, in welchem beide Lichtkammern (bzw. die den Lichtkammern zugeordneten Lichtquellen) aktiv sind (Fernlichtfunktion), ein im Bereich der Hell-Dunkelgrenze liegendes schattiges Band vermieden werden, indem Lichtstrahlen der unteren Lichtkammer gezielt in den Bereich der Hell-Dunkelgrenze gelenkt werden. In einem Betriebsmodus, in welchem nur die oberer Lichtkammer aktiv ist (Abblendlichtfunktion), bleibt dabei eine scharfe Hell-Dunkelgrenze erhalten, wodurch gesetzlichen Anforderungen in Bezug auf das Lichtbild der Leuchteinheit besonders einfach entsprochen werden kann.

In einer ersten besonders einfachen Variante der Erfindung ist es vorgesehen, dass die Blende zumindest einen ersten und einen zweiten das zumindest eine Lichtfenster begrenzenden Blendenabschnitt aufweist, wobei das zumindest eine Lichtfenster als Ausnehmung in der Blende ausgebildet ist. Die Blendenabschnitte können dabei lamellenartig ausgebildet sein. Generell kann die Blende inklusive der Blendenabschnitte dünn und flach ausgeführt sein.

In einer alternativen Variante der Erfindung ist es vorgesehen, dass die Blende zumindest einen ersten und einen zweiten das zumindest eine Lichtfenster begrenzenden Blendenabschnitt aufweist, wobei das zumindest eine Lichtfenster aus einem lichtdurchlässigen formbeständigen Material besteht. Die Blende kann somit besonders stabil einstückig ausgeführt werden. Das lichtdurchlässige Material entfaltet aufgrund der Lichtbrechung eine prismatische Wirkung, wobei die Blendenabschnitte sowie das Lichtfenster vorzugsweise so ausgestaltet sind, dass Lichtstrahlen aus der unteren Lichtkammer gezielt in den Bereich der Hell-Dunkel-Grenze umgelenkt werden können. Dadurch kann eine Überlappung der Lichtverteilung der unteren Lichtkammer mit der Lichtverteilung, die durch die obere Lichtkammer erzielt wird, erreicht werden.

Die Vermengung der Lichtstrahlen der beiden Lichtkammern kann weiter erhöht werden, indem die Blende zwei Lichtfenster aufweist, wobei jedem Lichtfenster ein Lichtpfad zugeordnet ist, wobei die Lichtpfade durch das Lichtfenster und durch die Projektionslinse nach außen verlaufen. Generell kann eine Mehrzahl an Lichtfenstern vorgesehen sein, die jeweils von Blendenabschnitten begrenzt werden. Die Anzahl der Lichtfenster kann im Allgemeinen den Erfordernissen des Lichtbildes entsprechend angepasst werden.

So ist es in einer günstigen Weiterbildung der Erfindung vorgesehen, dass die Blende einen ersten, einen zweiten und einen dritten Blendenabschnitt aufweist, wobei der zweite Blendenabschnitt lamellenartig ausgebildet ist und ein erstes Lichtfenster für einen ersten Lichtpfad zwischen dem ersten und dem zweiten Blendenabschnitt gebildet ist und ein zweites Lichtfenster für einen zweiten Lichtpfad zwischen dem zweiten und dem dritten Blendenabschnitt gebildet ist, wobei die Lichtkammern an der Ober- und Unterseite des ersten Blendenabschnittes angeordnet sind. Der erste Blendenabschnitt weist vorzugsweise eine größere räumliche Ausdehnung als die weiteren Blendenabschnitte auf und ist von der Brennebene weiter entfernt als der zweite und der dritte Blendenabschnitt. Erfindungsgemäß ist der zweite Blendenabschnitt dazu eingerichtet, den zweiten Lichtpfad in Richtung der optischen Achse der Projektionslinse abzulenken. Hierfür kann der zweite Blendenabschnitt, der lamellenartig ausgebildet ist, um dessen Längsachse verdreht sein, sodass eine gezielte Ablenkung des zweiten Lichtpfades in einfacher Weise möglich ist.

Die Erfindung betrifft des Weiteren einen Scheinwerfer mit zumindest einer Leuchteinheit nach einem der vorhergehenden Ansprüche. Weiterbildungen dieses Scheinwerfers entsprechen denen der Leuchteinheit, wie hier diskutiert.

Die Erfindung samt weiteren Vorteilen ist im Folgenden an Hand mehrerer beispielhaften, nicht einschränkenden Ausführungsformen näher erläutert, die in den Figuren veranschaulicht sind. Hierbei zeigt
Fig. 1 eine perspektivische Darstellung eines Ausschnittes einer Leuchteinheit gemäß dem Stand der Technik,
Fig. 2 einen Ausschnitt der Lichtbilder, die mit Hilfe der Leuchteinheit gemäß Fig. 1 erzeugt werden können,
Fig. 3 eine schematische Schnittdarstellung der Leuchteinheit gemäß Fig. 1,
Fig. 4 eine schematische Schnittdarstellung
Fig. 5 eine schematische Schnittdarstellung der Ausführungsform der Erfindung.

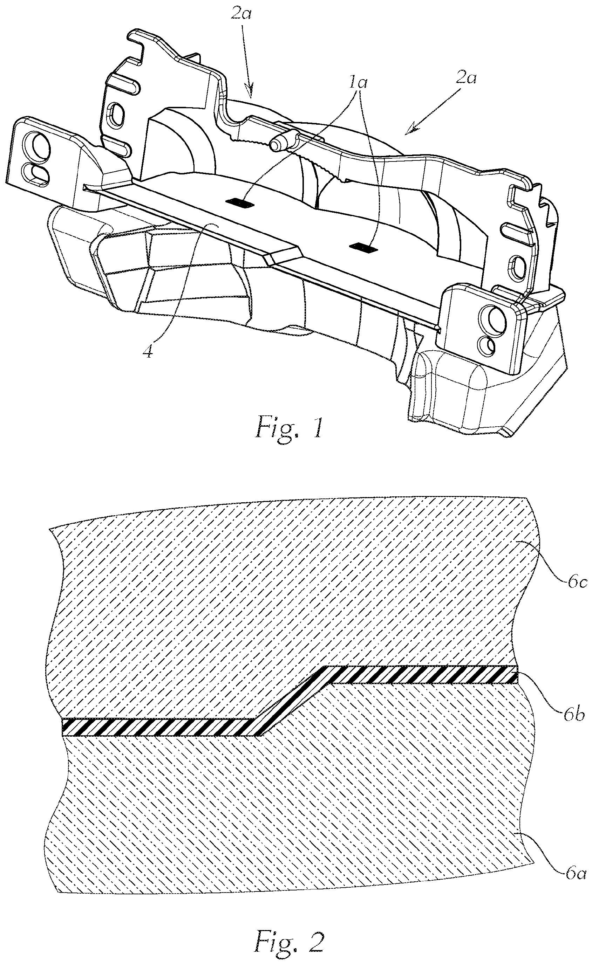

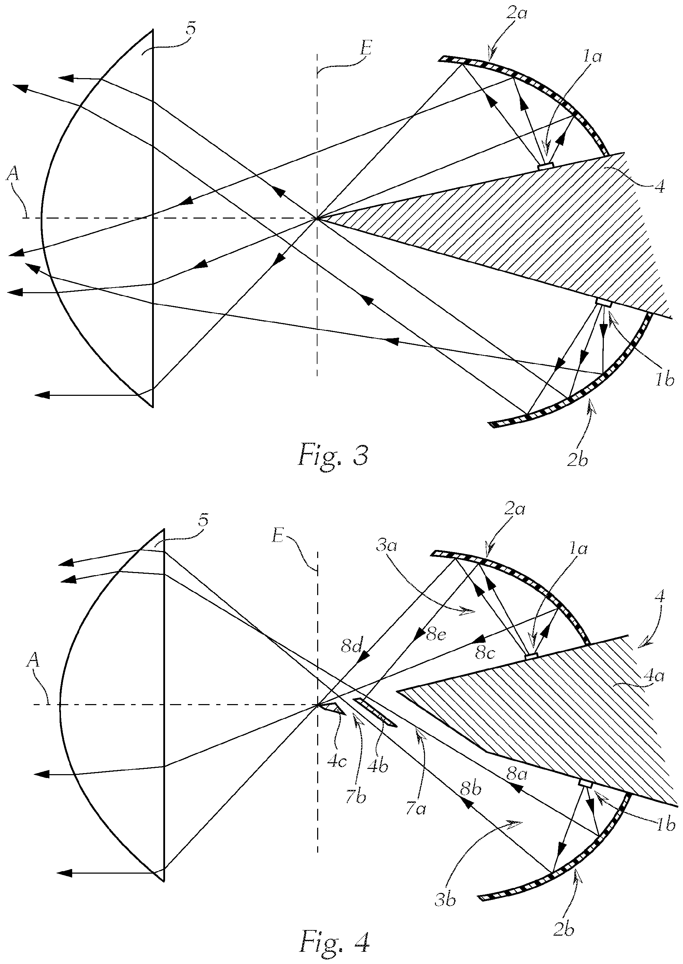

In Fig. 1 ist ein Ausschnitt einer aus dem Stand der Technik bekannten Leuchteinheit dargestellt. Darin sind zwei Lichtquellen 1a erkennbar, die jeweils von einem Reflektor 2a umgeben sind. Die Reflektoren 2a reflektieren von den Lichtquellen 1a abgestrahltes Licht unter anderem in Richtung einer nachgeschalteten Blende 4, welche der Erzeugung einer scharfen Hell-Dunkelgrenze dienen. Eine zugehörige Projektionslinse 5 ist in Fig. 3 dargestellt.

Fig. 2 zeigt einen Ausschnitt der Lichtbilder, die mit Hilfe der Leuchteinheit gemäß Fig. 1 erzeugt werden können. Darin sind zwei durch ein abgeschattetes Band 6b getrennte Bereiche, nämlich ein unterer Bereich 6a und ein oberer Bereich 6c, erkennbar, wobei der untere Bereich 6a jenen Bereich des Lichtbildes repräsentiert, der auch bei einer Abblendlichtfunktion der Leuchteinheit ausgeleuchtet wird. Der obere Bereich 6c bleibt während der Dauer der Abblendlichtfunktion unbeleuchtet, wobei das Band 6b entlang einer Hell-Dunkelgrenze verläuft, die aus zwei horizontalen Abschnitten besteht, die mittels eines schrägen Abschnittes verbunden sind. Der Verlauf dieser Grenze ist im Allgemeinen gesetzlich vorgeschrieben. Der obere Bereich 6c ist immer dann ausgeleuchtet, wenn eine Fernlichtfunktion der Leuchteinheit in Betrieb ist. Dabei werden in Fig. 1 nicht dargestellte Lichtquellen aktiviert, die im Allgemeinen unterhalb der Lichtquellen 1a angebracht sind und über Reflektoren ihr emittiertes Licht zumindest teilweise in Richtung der Blende 4 in den oberen Bereich 6c abstrahlen. Die Fernlichtfunktion zeichnet sich dabei also beispielsweise durch Zuschaltung weitere Lichtquellen aus, die in den oberen Bereich 6c strahlen. Diese zusätzlichen Lichtquellen können im Allgemeinen nicht dazu genutzt werden, Licht in den unteren Bereich 6a zu strahlen, da dies im Allgemeinen durch die Geometrie der Blende 4 verhindert wird. Die Blende 4 reicht nämlich bis zu einer Brennebene E der in Fig. 3 erkennbaren Projektionslinse 5 heran, wodurch eine scharfe Hell-Dunkelgrenze zwischen den oberen und dem unteren Bereich 6a und 6c gewährleistet werden sollte, und zwar immer dann, wenn die Ablendlichtfunktion der Leuchteinheit in Verwendung ist. Bei Betrieb der Fernlichtfunktion der Leuchteinheit hingegen ist eine sichtbare Hell-Dunkelgrenze zwischen dem unteren und dem oberen Bereich 6a und 6c unerwünscht, da eine möglichst gleichmäßige Ausleuchtung des gegenüber der Ablendlichtfunktion erweiterten Lichtbildes erwünscht ist. Aufgrund der unvermeidbaren räumlichen Ausdehnung (genauer gesagt, der Dicke) der Blende 4 sowie aufgrund von Abschattungseffekten kommt im Lichtbild der Fernlichtfunktion im Übergang zwischen unteren und oberen Bereich 6a und 6c immer ein schattiger Bereich, nämlich das Band 6b, zu liegen, welcher weniger stark ausgeleuchtet ist und deshalb im Lichtbild als dunkler Streifen erscheint. Bei Verwendung einer solchen Leuchteinheit in einem Kraftfahrzeugscheinwerfer wird dem Fahrzeuglenker das Erkennen der Umgebung erschwert, wodurch das Unfallrisiko steigt.

Fig. 3 zeigt eine schematische Schnittdarstellung der Leuchteinheit gemäß der Fig. 1. Die Blende 4 ist darin einstückig ausgeführt und reicht, wie erwähnt, bis zur Brennebene E der nachgeschalteten Projektionslinse 5 heran. An einer Ober- und einer Unterseite der Blende 4 ist jeweils eine Lichtquelle 1a bzw. 1b angebracht. Die Lichtquellen 1a und 1b sind von jeweils einem Reflektor 2a und 2b umgeben, welche Reflektoren 2a und 2b dazu eingerichtet sind, von den Lichtquellen 1a und 1b abgestrahltes Licht auf die nachgeschaltete Projektionslinse 5 zu lenken, wobei die Projektionslinse 5 Lichtstrahlen auf einem vor der Leuchteinheit liegenden Bereich projiziert. Die Projektionslinse 5 weist dabei eine optische Achse A auf, die im Wesentlichen normal zur Brennebene E orientiert ist. Dieser Aufbau ist aus dem Stand der Technik bekannt und weist die bereits zuvor beschriebenen Nachteile des Standes der Technik auf.

In Fig. 4 ist eine schematische Schnittdarstellung gezeigt. Eine Blende ist in zumindest zwei Blendenabschnitte aufgeteilt; im gezeigten Beispiel besteht sie aus einem ersten, einem zweiten und einem dritten Blendenabschnitt 4a, 4b und 4c, wobei der dritte Blendenabschnitt 4c bis zur Brennebene E einer nachgeschalteten Projektionslinse 5 heranreicht. Die Blende 4 weist im Allgemeinen eine reflektierende Oberfläche auf. Es versteht sich, dass die Blende 4 im Allgemeinen lichtundurchlässig ist. An einer Ober- und einer Unterseite des ersten Blendenabschnitts 4a ist jeweils eine Lichtquelle 1a bzw. 1b angebracht, wobei der Blendenabschnitt 4a zusätzlich als Kühlkörper für die Lichtquellen 1a und 1b dient. Die Lichtquellen 1a und 1b sind von jeweils einem Reflektor 2a und 2b umgeben, welche Reflektoren 2a und 2b dazu eingerichtet sind, von den Lichtquellen 1a und 1b abgestrahltes Licht auf eine nachgeschaltete Projektionslinse 5 zu lenken, wobei die Projektionslinse 5 Lichtstrahlen auf einem vor der Leuchteinheit liegenden Bereich nach außen projiziert. Die Lichtquellen 1a oder 1b befinden sich dabei vorzugsweise in einem Brennpunkt des jeweiligen Reflektors 2a oder 2b, wobei der Reflektor 2a eine obere Lichtkammer 3a und der zweite Reflektor 2b eine untere Lichtkammer 3b begrenzt. Die Projektionslinse 5 weist eine optische Achse A auf, die im Wesentlichen normal zur Brennebene E orientiert ist. Die drei Blendenabschnitte 4a, 4b und 4c sind durch Lichtfenster 7a und 7b bildende Ausnehmungen voneinander getrennt, wobei die Blendenabschnitte 4a, 4b und 4c gemeinsam mit den Ausnehmungen einen fiktiven Keil bilden, wobei die Seitenflächen dieses Keils mit fluchtenden Seitenflächen der Blendenabschnitte 4a, 4b und 4c zusammen fallen. Alternativ zu den Ausnehmungen könnten die Blendenabschnitte 4a, 4b und 4c durch ein lichtdurchlässiges formbeständiges Material voneinander distanziert sein. Die Blendenabschnitte 4a, 4b und 4c sind im Wesentlichen parallel zueinander, in Bezug auf die Brennebene E nacheinander angeordnet, erstrecken sich vorzugsweise normal zur Schnittebene gemäß Fig. 4 und erlauben den Durchtritt von Lichtstrahlen durch die Lichtfenster 7a und 7b in die Projektionslinse 5 entlang von Lichtpfaden 8a, 8b, die beispielhaft skizziert sind. Der Durchtritt erfolgt dabei in der gezeigten Ausführungsform ausschließlich von der unteren Lichtkammer 3b durch die Lichtfenster 7a und 7b. Die Blendenabschnitte 4a, 4b und 4c sind so ausgerichtet, dass Licht von der oberen Lichtkammer 3a durch die Lichtfenster 7a und 7b nicht hindurch treten kann. Dies ist beispielhaft anhand eines Lichtpfads 8e dargestellt, welcher durch den Blendenabschnitt 4b begrenzt wird. Damit wird erreicht, dass Licht aus der unteren Lichtkammer 3b, welche bei einer Fernlichtfunktion der Leuchteinheit hinzu geschaltet wird, in jenen Bereich gelenkt werden kann, welcher aus dem Stand der Technik bekannten und eingangs beschriebenen abgeschatteten Bands 6b entspricht. So kann die Hell-Dunkelgrenze bzw. das im Stand der Technik abgeschattete Band 6b ausgeleuchtet und ein homogenes Lichtbild erzielt werden. Eine Abblendlichtfunktion, für die in der gezeigten Ausführungsform ausschließlich die obere Lichtkammer 3a aktiviert wird, wird dabei nicht negativ von den Blendenabschnitten 4a, 4b, 4c beeinflusst, da diese so ausgeführt sind, dass keine Lichtstrahlen der oberen Lichtkammer 3a durch die Lichtfenster 7a oder 7b hindurch treten können. Die Lichtpfade 8c und 8d führen entlang oder oberhalb der Blende 4 in die Projektionslinse 5.

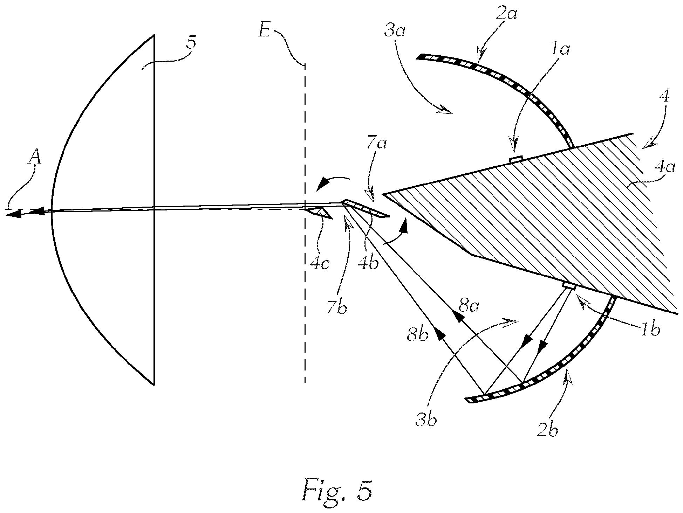

Fig. 5 zeigt eine Ausführungsform der Erfindung. Sofern nicht anders beschrieben entsprechen dabei die Merkmale mit gleichen Bezugszeichen jenen der ersten Ausführungsform und es gilt das unter Fig. 4 bereits Gesagte. Die Ausführungsform unterscheidet sich von dem Beispiel der Figur 4 durch die Ausrichtung des zweiten Blendenabschnittes 4b. Dieser ist nicht mehr wie zuvor fluchtend bzw. parallel angeordnet, sondern entlang dessen Längsachse entgegen dem Uhrzeigersinn verdreht. Die Verdrehung kann beispielsweise zwischen 0° und 45° betragen, insbesondere 5°, 10°, 15° oder 20°. Erfindungsgemäß verfügt der zweite Blendenabschnitt 4b über eine reflektierende Oberfläche, anhand welcher die Lichtpfade 8a und 8b umgelenkt werden können. So gelangen Lichtstrahlen aus der unteren Lichtkammer 3b entlang der Lichtpfade 8a und 8b in Bereiche des Lichtbildes der Leuchteinheit, welche ohne der Ablenkung durch den zweiten Blendenabschnitt 4b nicht zugänglich gewesen wären. Durch die erfindungsgemäße Ablenkung von Lichtpfaden können Inhomogenitäten im Lichtbild einer Leuchteinheit gezielt ausgeglichen werden.

Die in Figur 5 gezeigte Ausführungsform der Erfindung zeigt eine Blende 4 mit drei Blendenabschnitten 4a, 4b und 4c, welche zwei Lichtfenster 7a und 7b einschließen.

Natürlich kann die Anzahl der Blendenabschnitte sowie der Lichtfenster beliebig von der Anzahl der gezeigten Ausführungsform abweichen. Auch können mehrere Blendenabschnitte lamellenartig ausgeführt und/oder verdreht sein. Wesentlich ist der der Erfindung zugrunde liegende Gedanke, welcher durch einen Fachmann in mannigfaltiger Weise abgeändert werden kann und trotzdem als solcher aufrechterhalten bleibt.

## Patentansprüche

1. Leuchteinheit für einen Scheinwerfer, insbesondere einen Kraftfahrzeugscheinwerfer, aufweisend
- zumindest zwei Lichtquellen (1a, 1b),
- zumindest einen Reflektor (2a, 2b), der zwei Lichtkammern (3a, 3b) begrenzt,
- eine Blende (4) und
- eine Projektionslinse (5) mit einer optischen Achse (A),
wobei eine Lichtkammer (3a) an einer Oberseite und eine Lichtkammer (3b) an einer Unterseite der Blende (4) angeordnet ist, wobei innerhalb der Lichtkammern (3a, 3b) jeweils zumindest eine Lichtquelle (1a, 1b) angeordnet ist, und sich die Blende (4) zur Erzeugung einer scharfen Hell-Dunkelgrenze in einem durch die Leuchteinheit erzeugten Lichtbild im Wesentlichen bis zu einer Brennebene (E) der Projektionslinse (5) erstreckt, wobei die Blende (4) zumindest ein Lichtfenster (7a, 7b) aufweist, wobei zumindest ein Lichtpfad (8a, 8b, 8c, 8d) von einer Lichtkammer (3a, 3b) durch das zumindest eine Lichtfenster (7a, 7b) und durch die Projektionslinse (5) nach außen verläuft, wobei die Blende (4) zwei Lichtfenster (7a, 7b) sowie die Lichtfenster (7a, 7b) begrenzende Blendenabschnitte (4a, 4b, 4c) aufweist, wobei jedem Lichtfenster (7a, 7b) ein Lichtpfad (8a, 8b, 8c, 8d) zugeordnet ist, wobei die Lichtpfade (8a, 8b, 8c, 8d) durch das Lichtfenster (7a, 7b) und durch die Projektionslinse (5) nach außen verlaufen, wobei zumindest ein Blendenabschnitt (4a, 4b, 4c) eine reflektierende Oberfläche aufweist, durch die zumindest ein Lichtpfad (8a, 8b, 8c, 8d) in Richtung der optischen Achse (A) der Projektionslinse (5) ablenkbar ist, wobei der Durchtritt von Lichtpfaden (8a, 8b) durch die Lichtfenster (7a, 7b) ausschließlich von einer Lichtkammer (3b) erfolgt, **dadurch gekennzeichnet, dass** ein zweiter Blendenabschnitt (4b) vorgesehen ist, der eine reflektierende Oberfläche aufweist und entlang seiner Längsachse entgegen dem Uhrzeigersinn bis zu 45° verdreht ist.

2. Leuchteinheit nach Anspruch 1, **dadurch gekennzeichnet, dass** die Blende (4) zumindest zum Teil eine reflektierende Oberfläche aufweist.

3. Leuchteinheit nach Anspruch 1 oder 2, **dadurch gekennzeichnet, dass** der zumindest eine Lichtpfad (8a, 8b, 8c, 8d) durch das zumindest eine Lichtfenster (7a, 7b) ausschließlich von der an der Unterseite der Blende (4) befindlichen Lichtkammer (3b) durch das zumindest eine Lichtfenster (7a, 7b) durch die Projektionslinse (5) nach außen verläuft.

4. Leuchteinheit nach einem der Ansprüche 1 bis 3, **dadurch gekennzeichnet, dass** die Blende (4) zumindest einen ersten und einen zweiten das zumindest eine Lichtfenster (7a, 7b) begrenzenden Blendenabschnitt (4a, 4b, 4c) aufweist, wobei das zumindest eine Lichtfenster (7a, 7b) als Ausnehmung in der Blende (4) ausgebildet ist.

5. Leuchteinheit nach einem der Ansprüche 1 bis 3, **dadurch gekennzeichnet, dass** die Blende (4) zumindest einen ersten und einen zweiten das zumindest eine Lichtfenster (7a, 7b) begrenzenden Blendenabschnitt (4a, 4b, 4c) aufweist, wobei das zumindest eine Lichtfenster (7a, 7b) aus einem lichtdurchlässigen formbeständigen Material besteht.

6. Leuchteinheit nach einem der Ansprüche 1 bis 5, **dadurch gekennzeichnet, dass** die Blende (4) einen ersten, einen zweiten und einen dritten Blendenabschnitt (4a, 4b, 4c) aufweist, wobei der zweite Blendenabschnitt (4b) lamellenartig ausgebildet ist und ein erstes Lichtfenster (7a) für einen ersten Lichtpfad (8a) zwischen dem ersten und dem zweiten Blendenabschnitt (4a, 4b) gebildet ist und ein zweites Lichtfenster (7b) für einen zweiten Lichtpfad (8b) zwischen dem zweiten und dem dritten Blendenabschnitt (4b, 4c) gebildet ist, wobei die Lichtkammern (3a, 3b) an der Ober- und Unterseite des ersten Blendenabschnittes (4a) angeordnet sind.

7. Leuchteinheit nach Anspruch 6, **dadurch gekennzeichnet, dass** der zweite Blendenabschnitt (4b) dazu eingerichtet ist, den zweiten Lichtpfad (8b) in Richtung der optischen Achse (A) der Projektionslinse (5) abzulenken.

8. Kraftfahrzeug mit zumindest einer Leuchteinheit für einen Scheinwerfer nach einem der vorhergehenden Ansprüche.

## Claims

1. A lamp unit for a headlamp, in particular a motor vehicle headlamp, said unit having
- at least two light sources (1a, 1b),
- at least one reflector (2a, 2b), which delimits two light chambers (3a, 3b),
- a screen (4) and
- a projection lens (5) having an optical axis (A),
wherein one light chamber (3a) is arranged on an upper side and one light chamber (3b) is arranged on an underside of the screen (4), wherein at least one light source (1a, 1b) is arranged in each of the light chambers (3a, 3b), and, in order to produce a sharp light-dark boundary, the screen (4) extends in a light pattern generated by the lamp unit substantially as far as a focal plane (E) of the projection lens (5), wherein the screen (4) has at least one light window (7a, 7b), wherein at least one light path (8a, 8b, 8c, 8d) runs from a light chamber (3a, 3b) through the at least one light window (7a, 7b) and through the projection lens (5) to the outside, wherein the screen (4) has two light windows (7a, 7b) and screen portions (4a, 4b, 4c) delimiting the light windows (7a, 7b), wherein a light path (8a, 8b, 8c, 8d) is associated with each light window (7a, 7b), wherein the light paths (8a, 8b, 8c, 8d) run outwardly through the light windows (7a, 7b) and through the projection lens (5), wherein at least one screen portion (4a, 4b, 4c) has a reflective surface, by means of which at least one light path (8a, 8b, 8c, 8d) can be deflected in the direction of the optical axis (A) of the projection lens (5), wherein the light paths (8a, 8b) pass through the light windows (7a, 7b) exclusively from one light chamber (3b),
**characterised in that** a second screen portion (4b) is provided, which has a reflective surface and is rotated along its longitudinal axis in an anticlockwise direction up to 45°.

2. The lamp unit according to claim 1, **characterised in that** the screen (4) has a reflective surface at least in part.

3. The lamp unit according to claim 1 or 2,
**characterised in that** the at least one light path (8a, 8b, 8c, 8d) through the at least one light window (7a, 7b) runs outwardly through the at least one light window (7a, 7b) and through the projection lens (5) exclusively from the light chamber (3b) disposed on the underside of the screen (4).

4. The lamp unit according to any one of claims 1 to 3, **characterised in that** the screen (4) has at least one first and one second screen portion (4a, 4b, 4c) delimiting the at least one light window (7a, 7b), wherein the at least one light window (7a, 7b) is formed as a recess in the screen (4).

5. The lamp unit according to any one of claims 1 to 3, **characterised in that** the screen (4) has at least one first and one second screen portion (4a, 4b, 4c) delimiting the at least one light window (7a, 7b), wherein the at least one light window (7a, 7b) consists of a light-permeable dimensionally stable material.

6. The lamp unit according to any one of claims 1 to 5, **characterised in that** the screen (4) has a first, a second and a third screen portion (4a, 4b, 4c), wherein the second screen portion (4b) is lamella-like and a first light window (7a) for a first light path (8a) is formed between the first and the second screen portion (4a, 4b), and a second light window (7b) for a second light path (8b) is formed between the second and the third screen portion (4b, 4c), wherein the light chambers (3a, 3b) are arranged on the upper side and underside of the first screen portion (4a).

7. The lamp unit according to claim 6, **characterised in that** the second screen portion (4b) is designed to deflect the second light path (8b) in the direction of the optical axis (A) of the projection lens (5).

8. A motor vehicle having at least one lamp unit for a headlamp according to any one of the preceding claims.

## Revendications

1. Unité d'éclairage pour un phare, en particulier un phare de véhicule automobile, présentant
- au moins deux sources de lumière (1a, 1b) ;
- au moins un réflecteur (2a, 2b), qui délimite deux chambres de lumière (3a, 3b) ;
- un cache (4) ; et
- une lentille de projection (5) ayant un axe optique (A),
dans laquelle une chambre de lumière (3a) est disposée sur un côté supérieur et une chambre de lumière (3b) est disposée sur un côté inférieur du cache (4), dans laquelle, à l'intérieur de chacune des chambres de lumière (3a, 3b), au moins une source de lumière (1a, 1b) est disposée, et le cache (4) s'étend sensiblement jusqu'à un plan focal (E) de la lentille de projection (5) pour la production d'une ligne de coupure clair-obscur nette dans une image lumineuse produite par l'unité d'éclairage, dans laquelle le cache (4) présente au moins une fenêtre de lumière (7a, 7b), dans laquelle au moins un trajet de lumière (8a, 8b, 8c, 8d) s'étend vers l'extérieur à partir d'une chambre de lumière (3a, 3b) à travers ladite au moins une fenêtre de lumière (7a, 7b) et à travers la lentille de projection (5), dans laquelle le cache (4) présente deux fenêtres de lumière (7a, 7b) ainsi que des sections de cache (4a, 4b, 4c) délimitant les fenêtres de lumière (7a, 7b), dans laquelle un trajet de lumière (8a, 8b, 8c, 8d) est associé à chaque fenêtre de lumière (7a, 7b), dans laquelle les trajets de lumière (8a, 8b, 8c, 8d) s'étendent vers l'extérieur à travers la fenêtre de lumière (7a, 7b) et à travers la lentille de projection (5), dans laquelle au moins une section de cache (4a, 4b, 4c) présente une surface réfléchissante, au moyen de laquelle ledit au moins un trajet de lumière (8a, 8b, 8c, 8d) peut être dévié en direction de l'axe optique (A) de la lentille de projection (5), dans laquelle le passage des trajets de lumière (8a, 8b) à travers les fenêtres de lumière (7a, 7b) a lieu exclusivement à partir d'une chambre de lumière (3b),
**caractérisée par le fait qu'**une seconde section de cache (4b) est prévue, qui présente une surface réfléchissante et est tournée jusqu'à 45° le long de son axe longitudinal dans le sens contraire des aiguilles d'une montre.

2. Unité d'éclairage selon la revendication 1,
**caractérisée par le fait que** le cache (4) présente au moins en partie une surface réfléchissante.

3. Unité d'éclairage selon l'une des revendications 1 ou 2, **caractérisée par le fait que** ledit au moins un trajet de lumière (8a, 8b, 8c, 8d) à travers ladite au moins une fenêtre de lumière (7a, 7b) s'étend vers l'extérieur exclusivement à partir de la chambre de lumière (3b) se trouvant sur le côté inférieur du cache (4) à travers ladite au moins une fenêtre de lumière (7a, 7b), à travers la lentille de projection (5).

4. Unité d'éclairage selon l'une des revendications 1 à 3, **caractérisée par le fait que** le cache (4) présente au moins une première et une deuxième section de cache (4a, 4b, 4c) délimitant ladite au moins une fenêtre de lumière (7a, 7b), ladite au moins une fenêtre de lumière (7a, 7b) étant formée en tant que découpe dans le cache (4).

5. Unité d'éclairage selon l'une des revendications 1 à 3, **caractérisée par le fait que** le cache (4) présente au moins une première et une deuxième section de cache (4a, 4b, 4c) délimitant ladite au moins une fenêtre de lumière (7a, 7b), ladite au moins une fenêtre de lumière (7a, 7b) étant constituée d'une matière dimensionnellement stable perméable à la lumière.

6. Unité d'éclairage selon l'une des revendications 1 à 5, **caractérisée par le fait que** le cache (4) présente une première, une deuxième et une troisième section de cache (4a, 4b, 4c), la deuxième section de cache (4b) étant réalisée sous forme de lamelle et une première fenêtre de lumière (7a) pour un premier trajet de lumière (8a) est formée entre la première et la deuxième section de cache (4a, 4b) et une seconde fenêtre de lumière (7b) pour un second trajet de lumière (8d) est formée entre la deuxième et la troisième section de cache (4b, 4c), les chambres de lumière (3a, 3b) étant disposées sur les côtés supérieur et inférieur de la première section de cache (4a).

7. Unité d'éclairage selon la revendication 6,
**caractérisée par le fait que** la deuxième section de cache (4b) est conçue de façon à dévier le second trajet de lumière (8b) en direction de l'axe optique (A) de la lentille de projection (5).

8. Véhicule automobile comportant au moins une unité d'éclairage pour un phare selon l'une des revendications précédentes.
